(19) Europäisches Patentamt / European Patent Office / Office européen des brevets

(11) **EP 4 328 502 A1**

(12) **EUROPEAN PATENT APPLICATION**
published in accordance with Art. 153(4) EPC

(43) Date of publication:
**28.02.2024 Bulletin 2024/09**

(21) Application number: **22791651.7**

(22) Date of filing: **12.04.2022**

(51) International Patent Classification (IPC):
**F24F 7/08** (2006.01)

(52) Cooperative Patent Classification (CPC):
**F24F 7/003; F24F 7/007; F24F 7/08; F24F 8/10; F24F 11/89; F24F 12/00; F24F 13/14; F24F 13/28; F24F 13/30;** Y02B 30/56

(86) International application number:
**PCT/JP2022/017599**

(87) International publication number:
**WO 2022/224877 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.04.2021 CN 202110415456**

(71) Applicant: **DAIKIN INDUSTRIES, LTD.**
**Osaka-Shi, Osaka 530-0001 (JP)**

(72) Inventor: **WANG, Zheyuan**
**Shanghai 201108 (CN)**

(74) Representative: **Hoffmann Eitle**
**Patent- und Rechtsanwälte PartmbB**
**Arabellastraße 30**
**81925 München (DE)**

(54) **AIR TREATMENT DEVICE**

(57) An air treatment device includes: a case; a heat exchanger; a fresh air port; a supply air port; a return air port; an exhaust air port; a supply air path; and an exhaust air path. The case has a first side wall and a second side wall facing each other. The supply air path extends in a first direction, and the exhaust air path extends in a second direction crossing the first direction. The heat exchanger has a fresh air surface provided adjacent to the fresh air port and crossing the supply air path, and a return air surface provided adjacent to the return air port and crossing the fresh air surface and the exhaust air path. When viewed in a third direction perpendicular to the first direction and the second direction, the fresh air surface and the return air surface have a length ratio from 1.02 to 1.50. When viewed in the third direction, assuming that a straight line perpendicular to the first side wall and the second side wall of the case is a first virtual line, and that a straight line connecting two ends apart from each other, of the fresh air surface and the return air surface of the heat exchanger is a second virtual line, the first virtual line and the second virtual line form an angle from 1° to 11°.

FIG. 3

EP 4 328 502 A1

**Description**

**TECHNICAL FIELD**

The present invention relates to an air treatment device.

**BACKGROUND ART**

People have increasing demands for air quality in indoor living environments along with improvement in living standard. Weather with severe air quality indices such as PM 2.5 needs purification of indoor air with use of an air treatment device equipped with a PM 2.5 particle filter. Regarding this, Patent Literature 1 (CN 2115003041 U) discloses a ceiling-hung fresh air purifying ventilator accommodating a PM 2.5 filter to have functions of both ventilation and air purification, as well as succeeded in integration and downsizing of an air treatment device.

However, the ceiling-hung fresh air purifying ventilator according to Patent Literature 1 includes a heat exchanger that has a rectangular planar view and diagonal lines parallel to side walls of a case having a rectangular planar view. Addition of the PM 2.5 filter in such a case causes a large difference in resistance of an air duct (i.e. differential pressure) if gas supply volume and exhaust air volume are equal to each other. An excessively large resistance difference (differential pressure) of the air duct is likely to cause problems such as air leakage.

**SUMMARY OF THE INVENTION**

<Technical Problem>

The present invention has been achieved in view of the above technical problem, and an object thereof is to provide an air treatment device satisfying a demand for downsizing as well as achieving decrease in differential pressure of an air duct.

<Solution to Problem>

In order to solve the technical problems mentioned above, an air treatment device according to the present invention includes: a case; a heat exchanger; a fresh air port; a supply air port; a return air port; an exhaust air port; a supply air path; and an exhaust air path, the case accommodating the heat exchanger, the supply air path, and the exhaust air path, and having a first side wall and a second side wall facing each other, the heat exchanger configured to cause heat exchange with an air flow in the heat exchanger, the supply air path extending in a first direction, and allowing an air flow to be sent indoors from the fresh air port via the heat exchanger and the supply air port, the exhaust air path extending in a second direction crossing the first direction, and allowing an air flow to be discharged outdoors from the return air port via the heat exchanger and the exhaust air port, in which the heat exchanger has a fresh air surface provided adjacent to the fresh air port and crossing the supply air path, and a return air surface provided adjacent to the return air port and crossing the fresh air surface and the exhaust air path, when viewed in a third direction perpendicular to the first direction and the second direction, the fresh air surface and the return air surface have a length ratio from 1.02 to 1.50, and when viewed in the third direction, assuming that a straight line perpendicular to the first side wall and the second side wall of the case is a first virtual line, and a straight line connecting two ends apart from each other, of the fresh air surface and the return air surface of the heat exchanger is a second virtual line, the first virtual line and the second virtual line form an angle from 1° to 11°.

In the air treatment device according to the present invention, the length ratio between the fresh air surface and the return air surface of the heat exchanger is 1.02 to 1.50 when viewed in the third direction. Accordingly, appropriate increase in sectional area of the supply air path passing the fresh air surface and the supply air surface of the heat exchanger achieves decrease in airflow speed in the supply air path and extension of residence time of an air flow in the heat exchanger for improvement in heat exchange efficiency of the heat exchanger. Furthermore, appropriate increase in length of the exhaust air path passing the return air surface and an exhaust air surface of the heat exchanger achieves increase in pressure loss of the exhaust air path and extension of residence time of an air flow in the heat exchanger. In comparison to a case where the heat exchanger has a diagonal line parallel to a side wall of the case, this configuration satisfies a demand for downsizing of the air treatment device and decreases differential pressure between the supply air path and the exhaust air path, for prevention of air leakage of the air treatment device and improvement in heat exchange efficiency of the heat exchanger. Assuming that the straight line perpendicular to the first side wall and the second side wall of the case is the first virtual line, and the straight line connecting the two ends apart from each other, of the fresh air surface and the return air surface of the heat exchanger is the second virtual line, the first virtual line and the second virtual line form an angle from 1° to 11°. Accordingly, appropriate increase in sectional area of the supply air path passing the fresh air surface and the supply air surface of the heat exchanger achieves decrease in airflow speed in the supply air path and also extension of residence time of an air flow in the heat exchanger for improvement in heat exchange efficiency of the heat exchanger. Furthermore, appropriate increase in length of the exhaust air path passing the return air surface and the exhaust air surface of the heat exchanger achieves increase in pressure loss of the exhaust air path and extension of residence time of an air flow in the heat exchanger. This achieves decrease in differential pressure between the supply air path and the exhaust air path, satisfies the demand for downsizing of the air treatment device, as well as achieves maximum increase in size of the heat exchanger, and further secures heat exchange performance of the heat exchanger.

The air treatment device according to the present invention further includes a fresh air channelizing structure disposed adjacent to the fresh air port in the case and configured to diffuse an air flow toward the fresh air surface of the heat exchanger.

The air treatment device according to the present invention includes the fresh air channelizing structure disposed adjacent to the fresh air port in the case and configured to diffuse an air flow toward the fresh air surface of the heat exchanger. This achieves a more preferred fresh air diffusing effect through the fresh air channelizing structure for further decrease in pressure loss of the supply air path.

In the air treatment device according to the present invention, the fresh air channelizing structure includes a fresh air damper configured to be switchable between a first fresh air position for continuity of the supply air path and a second fresh air position for blockage of the supply air path, and a fresh air fixing structure configured to fix the fresh air damper in the case.

In the air treatment device according to the present invention, the fresh air damper is switchable between the first fresh air position for continuity of the supply air path and the second fresh air position for blockage of the supply air path. The air treatment device can thus adopt various modes such as a fresh air mode and an interior air circulation mode, for achievement of multiple functions of the air treatment device.

In the air treatment device according to the present invention, the fresh air damper includes a fresh air motor and a fresh air damper baffle. When the fresh air motor is connected to the fresh air damper baffle via a pushrod, the fresh air damper baffle is driven to switch the fresh air damper between the first fresh air position and the second fresh air position, and when the fresh air damper is positioned at the first fresh air position, the fresh air damper baffle forms a fresh air channelizing surface guiding an air flow from the fresh air port to the fresh air surface of the heat exchanger, and the fresh air fixing structure forms a fresh air diffusing surface that diffuses the air flow from the fresh air port toward the fresh air surface of the heat exchanger.

In the air treatment device according to the present invention, when the fresh air damper is positioned at the first fresh air position, the fresh air damper baffle forms the fresh air channelizing surface and the fresh air fixing structure forms the fresh air diffusing surface. This achieves a more preferred fresh air channelizing and diffusing effect through the fresh air diffusing surface and the fresh air channelizing surface for further decrease in pressure loss of the supply air path.

The air treatment device according to the present invention further includes a return air channelizing structure disposed adjacent to the return air port in the case and configured to diffuse an air flow toward the return air surface of the heat exchanger.

The air treatment device according to the present invention includes the return air channelizing structure disposed adjacent to the return air port in the case and configured to diffuse an air flow toward the return air surface of the heat exchanger. This achieves a more preferred return air diffusing effect through the return air channelizing structure for further decrease in pressure loss of the exhaust air path.

In the air treatment device according to the present invention, the return air channelizing structure includes a return air damper configured to be switchable between a first return air position for continuity of the exhaust air path and a second return air position for blockage of the exhaust air path, and a return air fixing structure configured to fix the return air damper in the case.

In the air treatment device according to the present invention, the return air damper is switchable between the first return air position for continuity of the exhaust air path and the second return air position for blockage of the exhaust air path. The air treatment device can thus adopt various modes such as the interior air circulation mode and the fresh air mode, for achievement of multiple functions of the air treatment device.

In the air treatment device according to the present invention, the return air damper includes a return air motor and a return air damper baffle. When the return air motor is connected to the return air damper baffle via a pushrod, the return air damper baffle is driven to switch the return air damper between the first return air position and the second return air position, and when the return air damper is positioned at the first return air position, the return air damper baffle forms a return air channelizing surface guiding an air flow from the return air port to the return air surface of the heat exchanger, and the return air fixing structure forms a return air diffusing surface that diffuses the air flow from the return air port toward the return air surface of the heat exchanger.

In the air treatment device according to the present invention, when the return air damper is positioned at the first return air position, the return air damper baffle forms the return air channelizing surface and the return air fixing structure forms the return air diffusing surface. This achieves a more preferred return air channelizing and diffusing effect through the return air diffusing surface and the return air channelizing surface for further decrease in pressure loss of the exhaust air path.

In the air treatment device according to the present invention, the case accommodates an electric component box positioned adjacent to the return air port on the exhaust air path.

In the air treatment device according to the present invention, the case accommodates the electric component box positioned adjacent to the return air port on the exhaust air path. In comparison to a case where the electric component box is disposed outside the case, this configuration leads to downsizing of the air treatment device without need to increase an attachment space. Furthermore, in comparison to a case where the electric component box is provided at a position with a large temperature difference from the interior of the case, such as a position adjacent to the fresh air port, the electric component box is provided adjacent to the return air port and is thus less likely to generate condensate water due to an excessively large temperature difference from air flowing in the electric component box, so as to prevent trouble such as a short circuit of the electric component box by the condensate water thus generated. In comparison to the case where the electric component box is disposed outside the case, the electric component box is provided on the exhaust air path in the case to occupy certain part of the width of the exhaust air path and decrease the width of the exhaust air path, and thus increase pressure loss of the exhaust air path. Furthermore, the pressure loss of the exhaust air path approaches the pressure loss of the supply air path to decrease differential pressure in the air treatment device, for prevention of air leakage.

In the air treatment device according to the present invention, a terminal block is provided outside the case and is disposed on the second side wall of the case.

In the air treatment device according to the present invention, the terminal block is provided on the second side wall outside the case. Accordingly, the thickness of the terminal block is substantially equal in length to projection of each of the supply air port and the return air port provided outside the case. In addition, the second side wall of the case is disposed adjacent to the electric component box. Such disposition achieves further downsizing of the entire air treatment device, as well as contributes to wiring between the electric component box and the terminal block. Moreover, the terminal block is provided on the second side wall outside the case, that is, on an indoor side, for easier maintenance of the terminal block from the indoor side.

In the air treatment device according to the present invention, the exhaust air path is provided with a sensor assembly that is disposed at an intermediate position in the third direction on the exhaust air path.

In the air treatment device according to the present invention, the sensor assembly is disposed at the intermediate position in the third direction on the exhaust air path. This further inhibits streamlining of the exhaust air path, increases pressure loss of the exhaust air path to approach the pressure loss of the supply air path and further decreases differential pressure in the air treatment device, for prevention of air leakage.

In the air treatment device according to the present invention, the case has a rectangular parallelepiped shape or a cubic shape, and the heat exchanger has a rectangular parallelepiped shape.

In the air treatment device according to the present invention, the case has the rectangular parallelepiped shape or the cubic shape, and the heat exchanger has the rectangular parallelepiped shape. In comparison to any other shape such as a circular shape, the case and the heat exchanger each having the rectangular parallelepiped shape or the cubic shape can be processed more easily, to achieve reduction in production cost for the air treatment device. The heat exchanger having the rectangular parallelepiped shape can more accurately control a windward area and an air flow route, to accurately regulate pressure loss of an air flow in the heat exchanger and regulate (decrease) differential pressure of the air duct for prevention of air leakage.

In the air treatment device according to the present invention, the supply air path is provided with a PM 2.5 filter, the supply air path has a supply air filter provided upstream of the heat exchanger, and the exhaust air path has an exhaust air filter provided upstream of the heat exchanger.

In the air treatment device according to the present invention, the supply air path is provided with the PM 2.5 filter configured to adsorb contaminating particles in an air flow sent indoors to purify air. Furthermore, the supply air filter and the exhaust air filter are provided upstream of the supply air path and the exhaust air path of the heat exchanger, respectively. This prevents damage to the heat exchanger due to entry into the heat exchanger of foreign matter such as dust contained in an air flow.

In the air treatment device according to the present invention, the heat exchanger has four corners each provided with a heat exchanger clamping device having a sealing member to prevent leakage from the heat exchanger, the heat exchanger clamping device is fixed to both or either one of a top plate and a bottom plate perpendicular to the third direction, of the case, and the heat exchanger clamping device is further provided with a filter clamping member configured to clamp the supply air filter and the exhaust air filter.

In the air treatment device according to the present invention, the four corners of the heat exchanger are each provided with the heat exchanger clamping device including the sealing member and the filter clamping member. The heat exchanger clamping devices thus position the heat exchanger to facilitate assembling work of the air treatment device. Furthermore, the sealing members seal the air duct passing the heat exchanger to prevent air leakage. The filter clamping members fix the filters, to prevent displacement of the filters during air flow passage and influence on air filtering quality.

<Advantageous Effects of Invention>

In the air treatment device according to the present invention, the length ratio between the fresh air surface and the return air surface of the heat exchanger is 1.02 to 1.50 when viewed in the third direction. Accordingly, appropriate increase in sectional area of the supply air path passing the fresh air surface and the supply air surface of the heat exchanger achieves decrease in airflow speed in the supply air path and extension of residence time of an air flow in the heat exchanger for improvement in heat exchange efficiency of the heat exchanger. Furthermore, appropriate increase in length of the exhaust air path passing the return air surface and the exhaust air surface of the heat exchanger achieves increase in pressure loss of the exhaust air path and extension of residence time of an air flow in the heat exchanger. In comparison to a case where the heat exchanger has a diagonal line parallel to a side wall of the case, this configuration satisfies a demand for downsizing of the air treatment device and decreases differential pressure between the supply air path and the exhaust air path, for prevention of air leakage of the air treatment device and improvement in heat exchange efficiency of the heat exchanger. Assuming that the straight line perpendicular to the first side wall and the second side wall of the case is the first virtual line, and the straight line connecting the two ends apart from each other, of the fresh air surface and the return air surface of the heat exchanger is the second virtual line, the first virtual line and the second virtual line form an angle from 1° to 11°. Accordingly, appropriate increase in sectional area of the supply air path passing the fresh air surface and the supply air surface of the heat exchanger achieves decrease in airflow speed in the supply air path and also extension of residence time of an air flow in the heat exchanger for improvement in heat exchange efficiency of the heat exchanger. Furthermore, appropriate increase in length of the exhaust air path passing the return air surface and the exhaust air surface of the heat exchanger achieves increase in pressure loss of the exhaust air path and extension of residence time of an air flow in the heat exchanger. This achieves decrease in differential pressure between the supply air path and the exhaust air path, satisfies the demand for downsizing of the air treatment device, as well as achieves maximum increase in size of the heat exchanger, and further secures heat exchange performance of the heat exchanger.

The following detailed description refers to additional characteristics and advantages of the air treatment device described in the present description. The following description allows the additional characteristics and advantages to be apparent to those skilled in the art or to be recognized by those skilled in the art through implementation of the embodiments in the present description. Such description includes the following detailed description, claims, and drawings.

Note that the summary described above and the following detailed description refer to various embodiments, in order to provide an outline or a framework for comprehension of the properties and characteristics of the subject matter of the claims. These include the drawings provided for further comprehension of the various embodiments, and the drawings are combined with the present description to constitute part of the present description. The drawings depict the various embodiments according to the present description, and are used to interpret the principle and operation of the subject matters of the claims, along with the description.

With reference to the above object, the present invention has a constituent feature clearly described in the claims and having advantages obvious from detailed description of the following drawings to be referred hereinafter. The drawings exemplarily indicate preferred embodiments of the present invention, without limiting the scope of the idea of the present invention.

**BRIEF DESCRIPTION OF THE DRAWINGS**

FIG. 1 is a schematic perspective view of an air treatment device according to an embodiment of the present invention, not depicting part of a bottom plate and a heat exchanger.
FIG. 2 is a schematic perspective view of the air treatment device according to the embodiment of the present invention, not depicting the bottom plate.
FIG. 3 is a schematic bottom view of the air treatment device according to the embodiment of the present invention, not depicting the bottom plate.
FIG. 4 is an enlarged view of a fresh air channelizing structure in the air treatment device according to the embodiment of the present invention.
FIG. 5 is an enlarged view of a return air channelizing structure in the air treatment device according to the embodiment of the present invention.

FIG. 6 is an explanatory pattern view of a relation between size and pressure loss of the heat exchanger in the air treatment device according to the embodiment of the present invention.

**DESCRIPTION OF EMBODIMENTS**

Description is made hereinafter to examples of embodiments of the present invention while depicting the examples of the embodiments with reference to the embodiments of the present invention in detail. The present invention will be described in combination with exemplary embodiments. It should be comprehended that the present description does not intend to limit the present invention to these exemplary embodiments. In contrast, it is an object of the present invention to cover these exemplary embodiments, as well as cover various selective modes, corrected modes, equivalent modes, and other embodiments, which can be included within the spirit and the scope of the present invention defined by the accompanying claims. For easier interpretation and accurate definition in the accompanying claims, terms "up", "down", "inner", and "outer" are used to refer to positions of characteristics according to the exemplary embodiments depicted in the drawings and describe these characteristics.

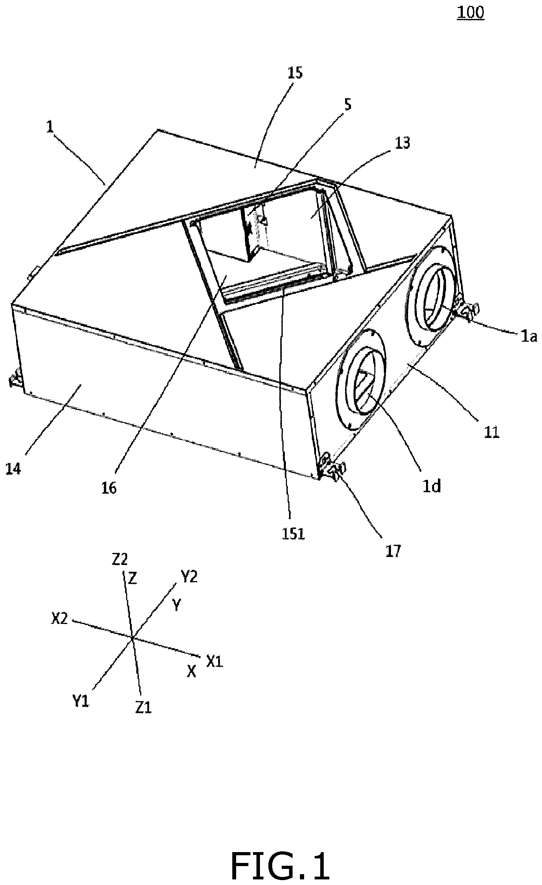

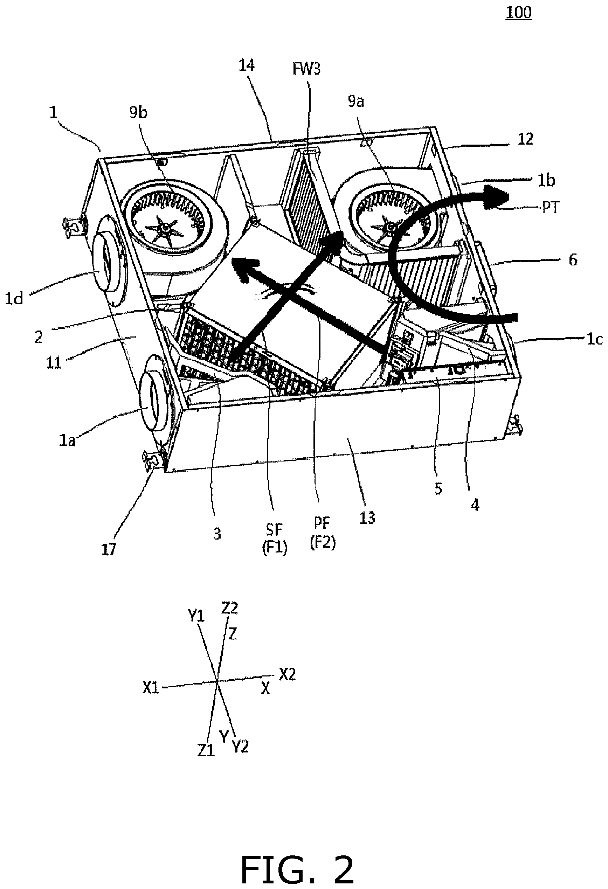

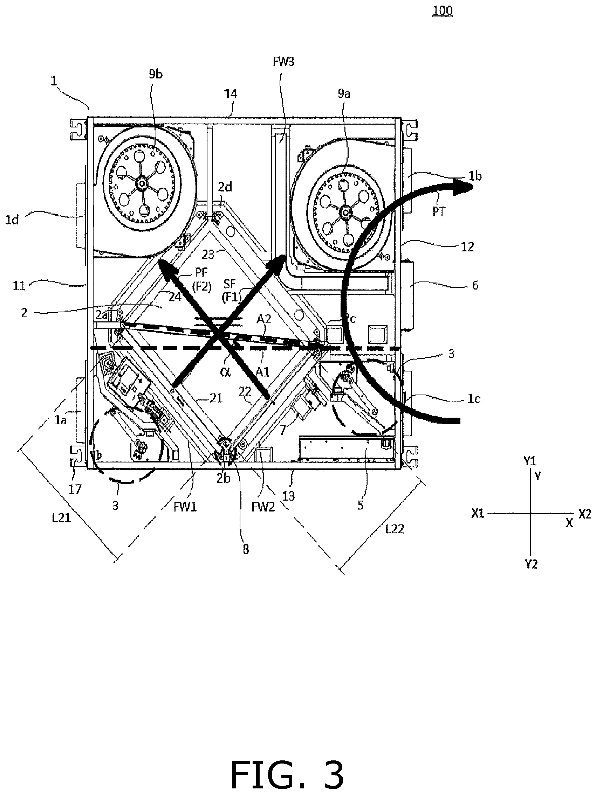

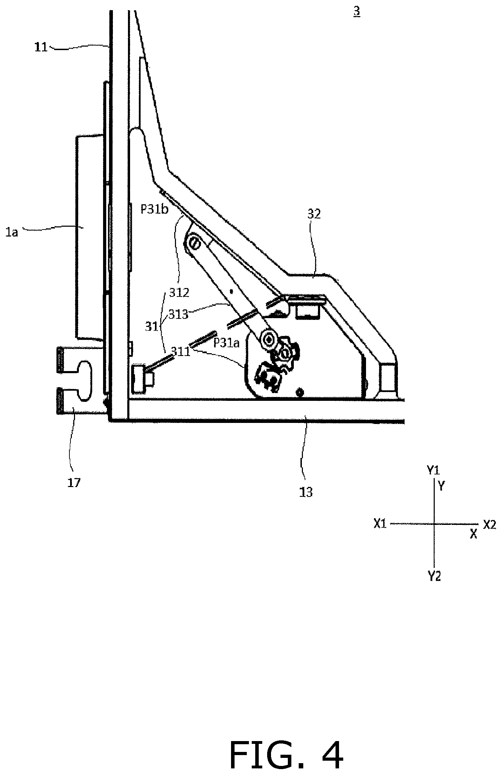

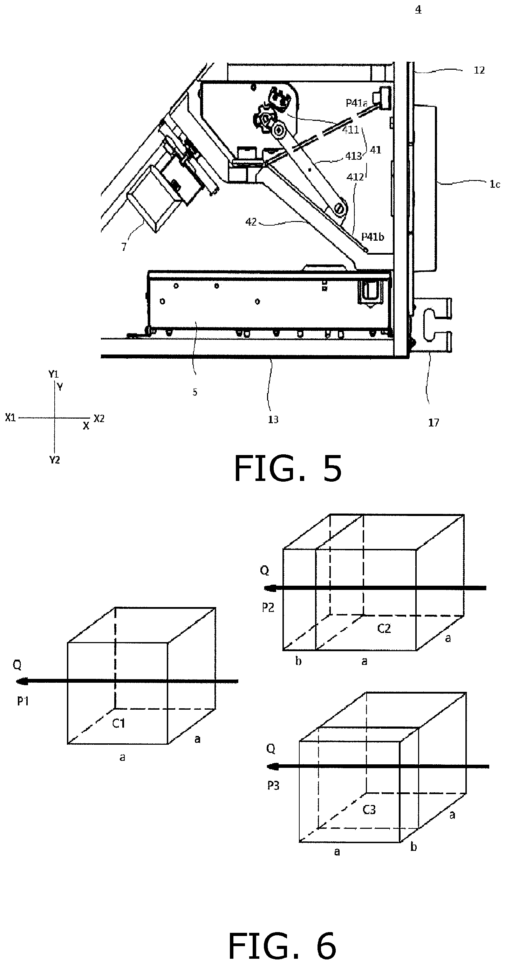

An air treatment device 100 according to an embodiment of the present invention will be described hereinafter with reference to FIG. 1 to FIG. 5. FIG. 1 is a schematic perspective view of the air treatment device 100 according to the embodiment of the present invention, not depicting part of a bottom plate 15 and a heat exchanger 2. FIG. 2 is a schematic perspective view of the air treatment device 100 according to the embodiment of the present invention, not depicting the bottom plate 15. FIG. 3 is a schematic bottom view of the air treatment device 100 according to the embodiment of the present invention, not depicting the bottom plate 15. FIG. 4 is an enlarged view of a fresh air channelizing structure 3 in the air treatment device 100 according to the embodiment of the present invention. FIG. 5 is an enlarged view of a return air channelizing structure 4 in the air treatment device 100 according to the embodiment of the present invention. FIG. 6 is an explanatory pattern view of a relation between size and pressure loss of the heat exchanger 2 in the air treatment device 100 according to the embodiment of the present invention.

For easier description, three directions perpendicular to one another will be referred to as an X direction, a Y direction, and a Z direction. The X direction has a first side referred to as a side X1 and a second side referred to as a side X2, the Y direction has a first side referred to as a side Y1 and a second side referred to as a side Y2, and the Z direction has a first side referred to as a side Z1 and a second side referred to as a side Z2.

As depicted in FIG. 1 to FIG. 3, the air treatment device 100 according to the present embodiment includes a case 1, a heat exchanger 2, a fresh air port 1a, a supply air port 1b, a return air port 1c, an exhaust air port 1d, a supply air path SF, and an exhaust air path PF. The case 1 accommodates the heat exchanger 2, the supply air path SF, and the exhaust air path PF, and includes a first side wall 11 and a second side wall 12 facing each other. The heat exchanger 2 causes heat exchange of an air flow in the heat exchanger 2. The supply air path SF extends in a first direction F1 (see FIG. 2 and FIG. 3) and allows an air flow to be imported indoors from the fresh air port 1a via the heat exchanger 2 and the supply air port 1b. The exhaust air path PF extends in a second direction F2 (see FIG. 2 and FIG. 3) crossing the first direction F1, and allows an air flow to be discharged outdoors from the return air port 1c via the heat exchanger 2 and the exhaust air port 1d. The heat exchanger 2 includes a fresh air surface 21 adjacent to the fresh air port 1a and crossing the supply air path SF, and a return air surface 22 adjacent to the return air port 1c and crossing the fresh air surface 21 and the exhaust air path PF. When viewed in the third direction perpendicular to the first direction F1 and the second direction F2 (i.e. the Z direction, which may also be called the third direction Z, hereinafter), length L21 of the fresh air surface 21 and length L22 of the return air surface 22 have a ratio from 1.02 to 1.50 (see FIG. 3). When viewed in the third direction Z, assuming that a straight line perpendicular to the first side wall 11 and the second side wall 12 of the case 1 is referred to as a first virtual line A1, and a straight line connecting two ends apart from each other of the fresh air surface 21 and the return air surface 22 of the heat exchanger 2 is referred to as a second virtual line A2, the first virtual line A1 and the second virtual line A2 form an angle $\alpha$ from 1° to 11° (see FIG. 3).

According to research, assuming that the air treatment device 100 has pressure loss P, a pressure loss coefficient C, airflow volume Q, airflow speed N, and a sectional area (a sectional area along a plane perpendicular to the air duct) M of the air duct, these values satisfy the following relational expressions.

$$P = C * Q\verb|^|2 \qquad \text{(Expression 1);}$$

$$Q = N * M \qquad \text{(Expression 2).}$$

That is, the pressure loss P is in direct proportion to a square of the airflow volume Q. When the airflow volume Q is constant, the airflow speed N is in inverse proportion to the sectional area M of the air duct.

As depicted in FIG. 6, the following calculation is conducted on the basis of the above theory, assuming that, a reference heat exchanger having side length a and a cubic shape has pressure loss P1 and a pressure loss coefficient C1, a rectangular parallelepiped obtained by adding length b to the side length of the heat exchanger in the cubic shape in an air duct direction (as indicated by an arrow in FIG. 6) has pressure loss P2 and a pressure loss coefficient C2, and a rectangular parallelepiped obtained by adding the length b to the side length of the heat exchanger in the cubic shape in a direction perpendicular to the air duct direction has pressure loss P3 and a pressure loss coefficient C3.

$$P1 = C1 * Q^{\wedge}2$$

$$P2 = C2 * Q^{\wedge}2$$

$$C2 = C1 * (a + b)/a$$

$$P2 = C1 * (a + b)/a * Q^{\wedge}2$$

$$P2 = ((a + b)/a) * P1 \qquad \text{(Expression 3)};$$

$$P1 = C1 * Q^{\wedge}2$$

$$P3 = C1 * Q3^{\wedge}2$$

$$Q3 = Q * a/(a + b)$$

$$P3 = C1 * (Q * a/(a + b))^{\wedge}2$$

$$P3 = (a/(a + b))^{\wedge}2 * P1 \qquad \text{(Expression 4)}.$$

As apparent from Expression 3, increase in length of the air duct leads to increase in pressure loss. As apparent from Expression 4, increase in sectional area of the air duct leads to decrease in pressure loss. Expression 3 and Expression 4 are combined to obtain the following.

$$P2/P3 = ((a + b)/a)^{\wedge}3 \qquad \text{(Expression 5)}.$$

That is, when the cubic shape of the heat exchanger 2 is changed into the rectangular parallelepiped shape, the pressure loss increases in proportion to a cube of ((a + b)/a).

It is necessary to particularly describe herein that, in the present embodiment, in comparison to the exhaust air path PF (the exhaust air path PF is provided with a prefilter such as an exhaust air filter FW2 to be described later), the supply air path SF (the supply air path SF is provided with a medium efficiency filter such as a supply air filter FW1 or a PM 2.5 filter FW3 to be described later) is provided with more members such as a filter. Accordingly, the supply air path SF is larger in pressure loss than the exhaust air path PF. Accordingly, the present inventor appropriately increases the pressure loss of the exhaust air path PF b by an appropriate measure for decrease in differential pressure between the supply air path SF and the exhaust air path PF. This prevents air leakage of the air treatment device 100.

The present inventor has thus found the following facts in accordance with the theoretical calculation. When the angle $\alpha$ between the first virtual line A1 and the second virtual line A2 is set to 1° to 11° (e.g. 1.6° or 9.8°), appropriate increase in sectional area of the supply air path SF passing the fresh air surface 21 and the supply air surface 23 of the heat exchanger 2 achieves decrease in airflow speed in the supply air path SF and extension of residence time of an air flow in the heat exchanger 2 for improvement in heat exchange efficiency of the heat exchanger 2. Furthermore, appropriate increase in length of the exhaust air path PF passing the return air surface 22 and an exhaust air surface 24 of the heat exchanger 2 achieves increase in pressure loss of the exhaust air path PF and extension of residence time of an air flow in the heat exchanger 2. In comparison to a case where the heat exchanger 2 has a diagonal line parallel to a third side wall 13 of the case 1, this configuration satisfies a demand for downsizing of the air treatment device 100, as well as achieves decrease in differential pressure between the supply air path and the exhaust air path, for prevention of air leakage of the air treatment device 100 and improvement in heat exchange efficiency of the heat exchanger 2. Also when the ratio between the length L21 of the fresh air surface 21 of the heat exchanger 2 and the length L22 of the return air surface 22 of the heat exchanger 2 is set to 1.02 to 1.50 (e.g. 1.06 or 1.19), appropriate increase in sectional area of the supply air path SF passing the fresh air surface 21 and the supply air surface 23 of the heat exchanger 2 achieves decrease in airflow speed in the supply air path SF and extension of residence time of an air flow in the heat exchanger for improvement in heat exchange efficiency of the heat exchanger. Furthermore, appropriate increase in length of the exhaust air path PF passing the return air surface 22 and the exhaust air surface 24 of the heat exchanger 2 achieves increase in pressure loss of the exhaust air path PF and extension of residence time of an air flow in the heat exchanger. This achieves decrease in differential pressure between the supply air path and the exhaust air path, satisfies the demand for downsizing of the air treatment device 100, as well as achieves maximum increase in size of the heat exchanger 2, and further secures heat exchange performance of the heat exchanger 2.

Specifically as depicted in FIG. 1 and FIG. 2, the case 1 of the air treatment device 100 according to the present embodiment has a substantially rectangular parallelepiped shape (having a substantially rectangular parallelepiped shape in a planar view in the Z (Z1) direction, the rectangular parallelepiped shape not limited to a strict rectangular parallelepiped shape but including a substantially rectangular parallelepiped shape being chamfered). Accordingly, the case 1 further includes, in addition to the first side wall 11 and the second side wall 12, the third side wall 13 and a fourth side wall 14 parallelly facing each other, as well as the bottom plate 15 and a top plate 16 parallelly facing each other.

As depicted in FIG. 2 and FIG. 3, the fresh air port 1a is provided on the side Y2 of the first side wall 11, the exhaust air port 1d is provided on the side Y1 of the first side wall 11, the return air port 1c is provided on the side Y2 of the second side wall 12, and the supply air port 1b is provided on the side Y1 of the second side wall 12. Furthermore, as depicted in FIG. 1, the bottom plate 15 is provided with a maintenance port 151 corresponding to the heat exchanger 2 and a maintenance plate opening and closing the maintenance port 151 (the maintenance plate not depicted and exemplarily rotatably opening and flowing the maintenance port 151).

As depicted in FIG. 1 to FIG. 3, the case 1 viewed in the Z direction has four corners each provided with a lifting member 17. Upon actual attachment, the lifting members 17 are exemplarily connected to a room ceiling by means of hanging bolts or the like so as to fix the air treatment device 100.

As depicted in FIG. 2 and FIG. 3, the heat exchanger 2 according to the present embodiment is exemplarily configured as a paper core heat exchanger, and has a substantially rectangular parallelepiped shape (having a substantially rectangular parallelepiped shape in a planar view in the Z (Z1) direction, the rectangular parallelepiped shape not unlimited to a strict rectangular parallelepiped shape but including a substantially rectangular parallelepiped shape being chamfered). Accordingly, the heat exchanger 2 further includes, in addition to the fresh air surface 21 and the return air surface 22, the supply air surface 23 and the exhaust air surface 24 perpendicular to each other. The supply air surface 23 is disposed adjacent to the supply air port 1b and crosses the supply air path SF. The exhaust air surface 24 is disposed adjacent to the exhaust air port 1d and crosses the exhaust air path PF.

In the air treatment device 100 according to the present embodiment, the case 1 and the heat exchanger 2 each have the rectangular parallelepiped shape. In comparison to any other shape such as a circular shape, the case 1 and the heat exchanger 2 each having the rectangular parallelepiped shape can be processed more easily, to achieve reduction in production cost for the air treatment device 100. The heat exchanger 2 having the rectangular parallelepiped shape can more accurately control a windward area and an air flow route, to accurately regulate pressure loss of an air flow in the heat exchanger 2 and regulate (decrease) differential pressure of the air duct for prevention of air leakage.

As depicted in FIG. 2 and FIG. 3, the heat exchanger 2 according to the present embodiment is disposed to be slanted from the case 1. Specifically as depicted in FIG. 3, in a planar view in the Z (Z1) direction, the four sides (surfaces) of the heat exchanger 2 are not parallel to four sides (side walls) of the case 1, and the fresh air surface 21 and the exhaust air surface 24 of the heat exchanger 2 cross at a corner 2a positioned on the side Y1 in comparison to a corner 2c where the return air surface 22 and the supply air surface 23 cross. That is, the diagonal line (i.e. the second virtual line A2) between the corners 2a and 2c of the heat exchanger 2 and the straight line (i.e. the first virtual line A1) parallel to the third side wall 13 (or the fourth side wall 14) of the case 1 form the angle α, not being parallel to each other.

Described above is the embodiment in which the case 1 has the substantially rectangular parallelepiped shape, without limiting the shape of the case 1 according to present invention. For instance, according to a modification example, a case 1 may have a polyhedral shape such as a cubic shape or a prismatic shape, a columnar shape, or the like.

Described above is the embodiment in which the fresh air port 1a and the exhaust air port 1d are provided respectively on the side Y2 and the side Y1 of the first side wall 11 of the case 1, and the return air port 1c and the supply air port 1b are provided respectively on the side Y2 and the side Y1 of the second side wall 12 of the case 1, without limiting the present invention. For instance, according to a modification example, the blow-out ports 1a to 1d may be provided in each of the third side wall 13 and the fourth side wall 14 of the case 1, or the blow-out ports 1a to 1d may be provided in the side walls 11 to 14 of the case 1, respectively.

It is necessary to describe herein that, as indicated by arrows in FIG. 2 and FIG. 3, the supply air path SF (in the first direction F1) perpendicular to the fresh air surface 21 and the supply air surface 23 of the heat exchanger 2 schematically indicates a rough current of an air flow in the supply air path SF but not a specific current of the air flow. The air flow in the supply air path SF according to the present embodiment actually flows from upstream to downstream, through the fresh air port 1a, the fresh air channelizing structure 3, the supply air filter FW1, the fresh air surface 21 of the heat exchanger 2, the supply air surface 23 of the heat exchanger 2, the PM 2.5 filter FW3, a supply air fan 9a, and the supply air port 1b in the mentioned order.

As depicted in FIG. 2 to FIG. 4, the air treatment device 100 according to the present embodiment includes the fresh air channelizing structure 3 disposed adjacent to the fresh air port 1a in the case 1 and configured to diffuse an air flow toward the fresh air surface 21 of the heat exchanger 2.

Specifically, as depicted in FIG. 4, the fresh air channelizing structure 3 according to the present embodiment includes a fresh air damper 31 configured to be switchable between a first fresh air position P31a (indicated by a dotted line in FIG. 4) for continuity of the supply air path SF and a second fresh air position P31b (indicated by a solid line and provided with a fresh air damper baffle 312 in FIG. 4) for blockage of the supply air path SF, and a fresh air fixing structure 32 configured to fix the fresh air damper 31 in the case 1.

More specifically, the fresh air damper 31 includes a fresh air motor 311 and the fresh air damper baffle 312. When the fresh air motor 311 is connected to the fresh air damper baffle 312 via a first pushrod 313, the fresh air damper baffle 312 is driven to switch the fresh air damper 31 between the first fresh air position P31a and the second fresh air position P31b. When the fresh air damper 31 is positioned at the first fresh air position P31a, the fresh air damper baffle 312 forms a fresh air channelizing surface guiding an air flow from the fresh air port 1a to the fresh air surface 21 of the heat exchanger 2, and the fresh air fixing structure 32 forms a fresh air diffusing surface diffusing the air flow from the fresh air port 1a toward the fresh air surface 21 of the heat exchanger 2.

The air treatment device 100 according to the present embodiment includes the fresh air channelizing structure 3 disposed adjacent to the fresh air port 1a in the case 1 and configured to diffuse an air flow toward the fresh air surface 21 of the heat exchanger 2. This achieves a more preferred fresh air diffusing effect through the fresh air channelizing structure 3 for further decrease in pressure loss of the supply air path SF. Furthermore, the fresh air damper 31 is switchable between the first fresh air position P31a for continuity of the supply air path SF and the second fresh air position P31b for blockage of the supply air path SF. The air treatment device 100 can thus adopt various modes such as a fresh air mode and an interior air circulation mode, for achievement of multiple functions of the air treatment device 100. When the fresh air damper 31 is positioned at the first fresh air position P31a, the fresh air damper baffle 312 forms the fresh air channelizing surface and the fresh air fixing structure 32 forms the fresh air diffusing surface. This achieves a more preferred fresh air channelizing and diffusing effect through the fresh air diffusing surface and the fresh air channelizing surface for further decrease in pressure loss of the supply air path SF.

As described above, the supply air path SF is provided with the PM 2.5 filter FW3, and the supply air filter FW1 is provided upstream of the heat exchanger 2 on the supply air path SF (see FIG. 3). Specifically, the PM 2.5 filter FW3 is provided downstream of the heat exchanger 2 on the supply air path SF, and the supply air filter FW1 is provided in parallel with the fresh air surface 21, adjacent to the fresh air port 1a in the fresh air surface 21 of the heat exchanger 2. The PM 2.5 filter thus adsorbs contaminating particles in an air flow sent indoors to purify air, and also prevents damage to the heat exchanger due to entry into the heat exchanger 2 of foreign matter such as dust contained in the air flow.

It is necessary to describe herein that the embodiment described above refers to the case where the supply air filter FW1 is provided upstream of the heat exchanger 2 and the PM 2.5 filter FW3 is provided downstream of the heat exchanger 2. However, the present invention should not be limited to the embodiment. According to a modification example, the supply air filter and the PM 2.5 filter may be provided both upstream and downstream of the heat exchanger 2 on the supply air path SF. Still alternatively, the supply air filter may be provided downstream of the heat exchanger 2 and the PM 2.5 filter may be provided upstream of the heat exchanger 2.

As depicted in FIG. 2 and FIG. 3, in a planar view in the Z direction (the third direction), the PM 2.5 filter FW3 has a substantially L shape, part of which is provided on the supply air path SF and other part of which is provided on a bypass air duct PT to be described later. The PM 2.5 filter FW3 is provided to surround, along with the second side wall and the fourth side wall 14 of the case 1, the supply air fan 9a. The supply air fan 9a according to the present embodiment is a centrifugal fan, though not limited thereto. The supply air fan may alternatively be an axial fan.

As indicated by arrows in FIG. 2 and FIG. 3, the exhaust air path PF (in the second direction F2) perpendicular to the return air surface 22 and the exhaust air surface 24 of the heat exchanger 2 schematically indicates a rough current of an air flow in the exhaust air path PF but not a specific current of the air flow. The air flow in the exhaust air path PF according to the present embodiment actually flows from upstream to downstream, through the return air port 1c, the return air channelizing structure 4, the electric component box 5, the sensor assembly 7, the exhaust air filter FW2, the return air surface 22 of the heat exchanger 2, the exhaust air surface 24 of the heat exchanger 2, the exhaust air fan 9b, and the exhaust air port 1d in the mentioned order.

As depicted in FIG. 2, FIG. 3, and FIG. 5, the air treatment device 100 according to the present embodiment includes the return air channelizing structure 4 disposed adjacent to the return air port 1c in the case 1 and configured to diffuse an air flow toward the return air surface 22 of the heat exchanger 2.

Specifically, as depicted in FIG. 5, the return air channelizing structure 4 according to the present embodiment includes a return air damper 41 configured to be switchable between a first return air position P41a (indicated by a dotted line in FIG. 5) for continuity of the exhaust air path PF and a second return air position P41b (indicated by a solid line and provided with a return air damper baffle 412 in FIG. 5) for blockage of the exhaust air path PF, and a return air fixing structure 42 configured to fix the return air damper 41 in the case 1.

More specifically, the return air damper 41 includes a return air motor 411 and the return air damper baffle 412. When the return air motor 411 is connected to the return air damper baffle 412 via a second pushrod 413, the return air damper baffle 412 is driven to switch the return air damper 41 between the first return air position P41a and the second return air position P41b. When the return air damper 41 is positioned at the first return air position P41a, the return air damper baffle 412 forms a return air channelizing surface guiding an air flow from the return air port 1c to the return air surface 22 of the heat exchanger 2, and the return air fixing structure 42 forms a return air diffusing surface that diffuses the air flow from the return air port 1c toward the return air surface 22 of the heat exchanger 2.

The air treatment device 100 according to the present embodiment includes the return air channelizing structure 4 disposed adjacent to the return air port 1c in the case 1 and configured to diffuse an air flow toward the return air surface 22 of the heat exchanger 2. This achieves a more preferred return air diffusing effect through the return air channelizing structure 4 for further decrease in pressure loss of the exhaust air path PF. Furthermore, the return air damper 41 is switchable between the first return air position P41a for continuity of the exhaust air path PF and the second return air position P41b for blockage of the exhaust air path PF. The air treatment device 100 can thus adopt various modes such as the interior air circulation mode and the fresh air mode, for achievement of multiple functions of the air treatment device 100. When the return air damper 41 is positioned at the first return air position P41a, the return air damper baffle 412 forms the return air channelizing surface and the return air fixing structure 42 forms the return air diffusing surface. This achieves a more preferred return air channelizing and diffusing effect through the return air diffusing surface and the return air channelizing surface for further decrease in pressure loss of the exhaust air path PF.

As described above, the electric component box 5 is disposed in the case 1 of the air treatment device 100 according to the present embodiment. The electric component box 5 is positioned adjacent to the return air port 1c on the exhaust air path PF. Specifically, as depicted in FIG. 2 and FIG. 3, the electric component box 5 is disposed to be in tight contact with insides of the second side wall 12 and the third side wall 13 of the case 1. In a planar view in the Z (Z1) direction, the electric component box 5 has a short side parallel to the second side wall 12 of the case 1, and a long side parallel to the third side wall 13 of the case 1.

The electric component box 5 is disposed in the case 1 according to the present embodiment. The electric component box 5 is positioned adjacent to the return air port 1c on the exhaust air path PF. In comparison to a case where the electric component box 5 is disposed outside the case 1, this configuration leads to downsizing of the air treatment device 100 without need to increase an attachment space. Furthermore, in comparison to a case where the electric component box 5 is provided at a position with a large temperature difference from the interior of the case 1, such as a position adjacent to the fresh air port 1a, the electric component box 5 is provided adjacent to the return air port 1c and is thus less likely to generate condensate water due to an excessively large temperature difference from air flowing in the electric component box 5, so as to prevent trouble such as a short circuit of the electric component box 5 by the condensate water thus generated. In comparison to the case where the electric component box 5 is disposed outside the case 1, the electric component box 5 is provided on the exhaust air path PF in the case 1 to occupy certain part of the width of the exhaust air path PF and decrease the width of the exhaust air path PF, and thus increase pressure loss of the exhaust air path PF. Furthermore, the pressure loss of the exhaust air path PF approaches the pressure loss of the supply air path SF to decrease differential pressure in the air treatment device 100, for prevention of air leakage.

As depicted in FIG. 2 and FIG. 3, a terminal block 6 is provided outside the case 1 and is disposed on the second side wall 12 of the case 1.

The terminal block 6 according to the present embodiment is provided on the second side wall 12 outside the case 1. In comparison to a case where the terminal block 6 is disposed in the case 1, this configuration saves an inner disposition space of the air treatment device 100. The terminal block 6 according to the present embodiment has thickness substantially equal in length to projection of each of the supply air port and the return air port provided outside the case 1. In addition, the second side wall 12 of the case 1 is disposed adjacent to the electric component box 5. Such disposition achieves further downsizing of the entire air treatment device 100 as well as contributes to (shortened) wiring between the electric component box 5 and the terminal block 6. Moreover, the terminal block 6 is provided on the second side wall 12 outside the case 1, that is, on an indoor side, for easier maintenance of the terminal block 6 from the indoor side.

As depicted in FIG. 3 and FIG. 5, the exhaust air path PF according to the present embodiment is further provided with the sensor assembly 7 that is provided at an intermediate position in the third direction Z on the exhaust air path PF. Specifically, the sensor assembly 7 according to the present embodiment is disposed adjacent to the return air surface 22 of the heat exchanger 2 so as to detect temperature, humidity, particles, and the like of an air flow passing the sensor assembly 7.

The sensor assembly 7 according to the present embodiment is provided at the intermediate position in the third direction Z on the exhaust air path PF. This further inhibits streamlining of the exhaust air path PF, increases pressure loss of the exhaust air path PF to approach the pressure loss of the supply air path SF and further decrease differential pressure in the air treatment device 100, for prevention of air leakage.

As described above, the exhaust air filter FW2 is provided upstream of the heat exchanger 2 on the exhaust air path PF (see FIG. 3). Specifically, the exhaust air filter FW2 is provided adjacent to the return air port 1c in the return air surface 22 of the heat exchanger 2, so as to be parallel to the return air surface 22. This prevents damage to the heat exchanger 2 due to entry into the heat exchanger of foreign matter such as dust contained in an air flow.

It is necessary to describe herein that the embodiment described above refers to the case where the exhaust air filter FW2 is provided upstream of the heat exchanger 2. However, the present invention should not be limited to the embodiment. According to a modification example, the exhaust air filter FW2 may be provided downstream of the heat exchanger 2 on the exhaust air path PF. Still alternatively, the exhaust air filter may be provided both upstream and downstream of the heat exchanger 2.

As described above, according to the present embodiment, the exhaust air fan 9b is further provided between the exhaust air surface 24 of the heat exchanger 2 and the exhaust air port 1d. The exhaust air fan 9b according to the present embodiment is a centrifugal fan, though not limited thereto. The exhaust air fan may alternatively be an axial fan.

As depicted in FIG. 2 and FIG. 3, in addition to the supply air path SF and the exhaust air path PF, the case 1 of the air treatment device 100 according to the present embodiment further accommodates the bypass air duct PT that allows the return air port 1c and the supply air port 1b to communicate with each other. Accordingly, when the return air channelizing structure 4 blocks the exhaust air path, an indoor air flow from the return air port 1c is imported indoors again via the PM 2.5 filter FW3, the supply air fan 9a, and the supply air port 1b, to achieve an indoor circulation mode.

As depicted in FIG. 3, the heat exchanger 2 according to the present embodiment has four corners 2a, 2b, 2c, and 2d each having a heat exchanger clamping device 8 that is provided with a sealing member (not depicted) to prevent leakage from the heat exchanger 2. The heat exchanger clamping device 8 is fixed to both or either one of the top plate 16 and the bottom plate 15 of the case 1. The heat exchanger clamping device 8 is further provided with a filter clamping member (not depicted) configured to clamp the supply air filter FW1 and the exhaust air filter FW2.

The four corners 2a, 2b, 2c, and 2d of the heat exchanger 2 according to the present embodiment are each provided with the heat exchanger clamping device 8 including the sealing member and the filter clamping member. The heat exchanger clamping devices 8 thus position the heat exchanger 2 to facilitate assembling work of the air treatment device 100. Furthermore, the sealing members seal the air duct passing the heat exchanger 2 to prevent air leakage. The filter clamping members fix the supply air filter FW1 and the exhaust air filter FW2, to prevent displacement of the filters FW1 and FW2 during air flow passage and influence on air filtering quality.

The embodiments of the present invention can be combined freely, can be modified where appropriate, and can be removed within the scope of the present invention.

## REFERENCE SIGNS LIST

| | |
|---|---|
| 100 | air treatment device |
| 1 | case |
| 11 | first side wall |
| 12 | second side wall |
| 13 | third side wall |
| 14 | fourth side wall |
| 15 | bottom plate |
| 151 | maintenance port |
| 16 | top plate |
| 17 | lifting member |
| 1a | fresh air port |
| 1b | supply air port |
| 1c | return air port |
| 1d | exhaust air port |
| 2 | heat exchanger |
| 21 | fresh air surface |
| 22 | return air surface |
| 23 | supply air surface |
| 24 | exhaust air surface |
| 2a, 2b, 2c, 2d | corner |
| 3 | fresh air channelizing structure |
| 31 | fresh air damper |
| 311 | fresh air motor |
| 312 | fresh air damper baffle |
| 313 | first pushrod |

| 32 | fresh air fixing structure |
|---|---|
| 4 | return air channelizing structure |
| 41 | return air damper |
| 411 | return air motor |
| 412 | return air damper baffle |
| 413 | second pushrod |
| 42 | return air fixing structure |
| 5 | electric component box |
| 6 | terminal block |
| 7 | sensor assembly |
| 8 | heat exchanger clamping device |
| 9a | supply air fan |
| 9b | exhaust air fan |
| A1 | first virtual line |
| A2 | second virtual line |
| F1 | first direction |
| F2 | second direction |
| L21 | length of fresh air surface |
| L22 | length of return air surface |
| FW1 | supply air filter |
| FW2 | exhaust air filter |
| FW3 | PM 2.5 filter |
| P31a | first fresh air position |
| P31b | second fresh air position |
| P41a | first return air position |
| P41b | second return air position |
| PF | exhaust air path |
| PT | bypass air duct |
| SF | supply air path |
| α | angle |

**Claims**

1. An air treatment device comprising:

a case;
a heat exchanger;
a fresh air port;
a supply air port;
a return air port;
an exhaust air port;
a supply air path; and
an exhaust air path,
the case accommodating the heat exchanger, the supply air path, and the exhaust air path, and having a first side wall and a second side wall facing each other,
the heat exchanger configured to cause heat exchange with an air flow in the heat exchanger,
the supply air path extending in a first direction, and allowing an air flow to be sent indoors from the fresh air port via the heat exchanger and the supply air port,
the exhaust air path extending in a second direction crossing the first direction, and allowing an air flow to be discharged outdoors from the return air port via the heat exchanger and the exhaust air port,
wherein
the heat exchanger has

a fresh air surface provided adjacent to the fresh air port and crossing the supply air path, and
a return air surface provided adjacent to the return air port and crossing the fresh air surface and the exhaust air path,

when viewed in a third direction perpendicular to the first direction and the second direction, the fresh air surface and the return air surface have a length ratio from 1.02 to 1.50, and

when viewed in the third direction, assuming that a straight line perpendicular to the first side wall and the second side wall of the case is a first virtual line, and that a straight line connecting two ends apart from each other, of the fresh air surface and the return air surface of the heat exchanger is a second virtual line, the first virtual line and the second virtual line form an angle from 1° to 11°.

2.  The air treatment device according to claim 1, further comprising a fresh air channelizing structure disposed adjacent to the fresh air port in the case and configured to diffuse an air flow toward the fresh air surface of the heat exchanger.

3.  The air treatment device according to claim 2, wherein

    the fresh air channelizing structure includes
    a fresh air damper configured to be switchable between a first fresh air position for continuity of the supply air path and a second fresh air position for blockage of the supply air path, and
    a fresh air fixing structure configured to fix the fresh air damper in the case.

4.  The air treatment device according to claim 3, wherein

    the fresh air damper includes a fresh air motor and a fresh air damper baffle, when the fresh air motor is connected to the fresh air damper baffle via a pushrod, the fresh air damper baffle is driven to switch the fresh air damper between the first fresh air position and the second fresh air position, and
    when the fresh air damper is positioned at the first fresh air position, the fresh air damper baffle forms a fresh air channelizing surface guiding an air flow from the fresh air port to the fresh air surface of the heat exchanger, and the fresh air fixing structure forms a fresh air diffusing surface that diffuses the air flow from the fresh air port toward the fresh air surface of the heat exchanger.

5.  The air treatment device according to any one of claims 1 to 4, further comprising a return air channelizing structure disposed adjacent to the return air port in the case and configured to diffuse an air flow toward the return air surface of the heat exchanger.

6.  The air treatment device according to claim 5, wherein

    the return air channelizing structure includes
    a return air damper configured to be switchable between a first return air position for continuity of the exhaust air path and a second return air position for blockage of the exhaust air path, and
    a return air fixing structure configured to fix the return air damper in the case.

7.  The air treatment device according to claim 6, wherein

    the return air damper includes a return air motor and a return air damper baffle, when the return air motor is connected to the return air damper baffle via a pushrod, the return air damper baffle is driven to switch the return air damper between the first return air position and the second return air position, and
    when the return air damper is positioned at the first return air position, the return air damper baffle forms a return air channelizing surface guiding an air flow from the return air port to the return air surface of the heat exchanger, and the return air fixing structure forms a return air diffusing surface that diffuses the air flow from the return air port toward the return air surface of the heat exchanger.

8.  The air treatment device according to claim 1, wherein the case accommodates an electric component box positioned adjacent to the return air port on the exhaust air path.

9.  The air treatment device according to claim 1, wherein a terminal block is provided outside the case and is disposed on the second side wall of the case.

10. The air treatment device according to claim 1, wherein the exhaust air path is provided with a sensor assembly that is disposed at an intermediate position in the third direction on the exhaust air path.

11. The air treatment device according to any one of claims 1 to 10, wherein the case has a rectangular parallelepiped shape or a cubic shape, and the heat exchanger has a rectangular parallelepiped shape.

12. The air treatment device according to claim 11, wherein

the supply air path is provided with a PM 2.5 filter,
the supply air path has a supply air filter provided upstream of the heat exchanger, and
the exhaust air path has an exhaust air filter provided upstream of the heat exchanger.

13. The air treatment device according to claim 12, wherein

the heat exchanger has four corners each provided with a heat exchanger clamping device having a sealing member to prevent leakage from the heat exchanger,
the heat exchanger clamping device is fixed to both or either one of a top plate and a bottom plate perpendicular to the third direction, of the case, and
the heat exchanger clamping device is further provided with a filter clamping member configured to clamp the supply air filter and the exhaust air filter.

FIG.1

100

14    FW3

1    9b           9a

12

1b

PT

1d

6

2

11

1c

1a

17    3    SF    PF    13    5    4
              (F1)   (F2)

Y1   Z2
        Z

X1 ———————— X2
        X

Z1   Y   Y2

# FIG. 2

100

FIG. 3

FIG. 4

FIG. 5

FIG. 6

## INTERNATIONAL SEARCH REPORT

| International application No. |
|---|
| **PCT/JP2022/017599** |

**A. CLASSIFICATION OF SUBJECT MATTER**

*F24F 7/08*(2006.01)i
FI: F24F7/08 101H; F24F7/08 101G; F24F7/08 101B; F24F7/08 101A; F24F7/08 101L; F24F7/08 101J; F24F7/08 101N

According to International Patent Classification (IPC) or to both national classification and IPC

**B. FIELDS SEARCHED**

Minimum documentation searched (classification system followed by classification symbols)

F24F7/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-309072 A (MITSUBISHI ELECTRIC CORP) 04 November 2004 (2004-11-04) paragraphs [0008]-[0015], fig. 1-4 | 1-2 |
| Y | | 3-13 |
| Y | JP 2012-180948 A (MITSUBISHI ELECTRIC CORP) 20 September 2012 (2012-09-20) paragraphs [0014]-[0027], fig. 1-4 | 3-13 |
| Y | JP 3-255838 A (MITSUBISHI ELECTRIC CORP) 14 November 1991 (1991-11-14) publication gazette, p. 3, upper left column, line 2 to p. 4, lower right column, line 5, fig. 1-4 | 8, 11-13 |
| Y | WO 2020/008597 A1 (MITSUBISHI ELECTRIC CORP) 09 January 2020 (2020-01-09) paragraphs [0011]-[0052], fig. 1-7 | 9, 11--13 |
| Y | JP 2012-189265 A (MITSUBISHI ELECTRIC CORP) 04 October 2012 (2012-10-04) paragraphs [0014], [0048]-[0049], fig. 2 | 10-13 |
| Y | JP 2015-158313 A (MITSUBISHI ELECTRIC CORP) 03 September 2015 (2015-09-03) paragraphs [0025]-[0030], fig. 11-13 | 12-13 |

☑ Further documents are listed in the continuation of Box C.     ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/017599**

| C. | DOCUMENTS CONSIDERED TO BE RELEVANT | |
|---|---|---|
| Category* | Citation of document, with indication, where appropriate, of the relevant passages | Relevant to claim No. |
| Y | JP 2020-34223 A (PANASONIC IP MAN CORP) 05 March 2020 (2020-03-05) paragraphs [0046]-[0047], fig. 1 | 12-13 |
| A | WO 2017/017845 A1 (MITSUBISHI ELECTRIC CORP) 02 February 2017 (2017-02-02) | 1-13 |
| A | JP 2014-59094 A (PANASONIC CORP) 03 April 2014 (2014-04-03) | 2-7 |

Form PCT/ISA/210 (second sheet) (January 2015)

**INTERNATIONAL SEARCH REPORT**
Information on patent family members

International application No.

**PCT/JP2022/017599**

| Patent document cited in search report | | | Publication date (day/month/year) | Patent family member(s) | | | Publication date (day/month/year) |
|---|---|---|---|---|---|---|---|
| JP | 2004-309072 | A | 04 November 2004 | (Family: none) | | | |
| JP | 2012-180948 | A | 20 September 2012 | (Family: none) | | | |
| JP | 3-255838 | A | 14 November 1991 | (Family: none) | | | |
| WO | 2020/008597 | A1 | 09 January 2020 | (Family: none) | | | |
| JP | 2012-189265 | A | 04 October 2012 | (Family: none) | | | |
| JP | 2015-158313 | A | 03 September 2015 | (Family: none) | | | |
| JP | 2020-34223 | A | 05 March 2020 | WO | 2020/045002 | A1 | |
| WO | 2017/017845 | A1 | 02 February 2017 | US | 2018/0180318 | A1 | |
| | | | | EP | 3330626 | A1 | |
| | | | | CN | 107850331 | A | |
| JP | 2014-59094 | A | 03 April 2014 | WO | 2013/073165 | A1 | |
| | | | | EP | 2781846 | A1 | |
| | | | | CN | 103946638 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2115003041 U